# EUROPEAN PATENT SPECIFICATION

(11) **EP 2 226 190 B1**
(45) Date of publication and mention of the grant of the patent: **25.03.2015**
(21) Application number: 08871076.9
(22) Date of filing: 29.12.2008
(51) Int. Cl.: B32B 3/12, B32B 27/00, B32B 5/18

(54) **A HONEYCOMB COMPOSITE PLATE OF PLASTIC FOAM**
WABENVERBUNDPLATTE AUS SCHAUMKUNSTSTOFF
PLAQUE COMPOSITE EN NID D'ABEILLES FORMÉE DE PLASTIQUE ALVÉOLAIRE

(30) Priority: 29.12.2007 CN 200710144145
(43) Date of publication of application: 08.09.2010
(73) Proprietor: Leng, Luhao, Huli District Xiamen Fujian 361009 (CN)
(72) Inventor: Leng, Luhao, Huli District Xiamen Fujian 361009 (CN)
(74) Representative: Garavelli, Paolo
(86) International application number: PCT/CN2008/073809
(87) International publication number: WO 2009/089757

(56) References cited:
- EP-A1- 1 149 691
- CN-A- 1 657 275
- JP-A- 2006 130 734
- JP-A- 2006 130 734

## Description

### FIELD OF INVENTION

The invention relates to a composite plate, more particularly, to a honeycomb composite plate of plastic foam.

### BACKGROUND OF TECHNOLOGY

The present applicant filed a Chinese utility model entitled "A composite plate" in August 16, 2002, with publication dateof September 3, 2003, and publication No. CN2570025Y. The composite plate comprises surface sheet/bottom plate/honeycomb paper/plastic foam fillings; surface sheet and bottom plate are plastic plate directly formed by blow mounding or hot pressing, honeycomb paper is sandwiched between the surface sheet and the bottom plate, the edge of the surface sheet is sealed and fixed to its corresponding edge of bottom plate with ultrasonic welding or glue, and plastic foam fillings is filled in the space between honeycomb paper/ surface sheet and bottom plate, where they do not contact with each other. Since the plastic plate directly forms the surface sheet and the bottom plate, and the honeycomb paper is applied as the skeleton, the plastic foam is applied as the filling and adhesive, so, the plate can be designed as various flexible shapes according to practical using requirements; further, it needs no additional machining. Said structure can be conveniently embedded and connected to the composite plate or connection pipe, thereby the connection strength of plate and other components will be enhanced.

The plate has advantages such as light, high strength, easy to clean, cheaply made, but there is improvement needed yet as follows: firstly, the material of honeycomb plate differs from the blister surface sheet and blister bottom plate, so the adhesion strength or welding between them is unstable and easily to disassemble; secondly, the bearing strength of honeycomb plate is weak, so it needs to plastic foam for filling, the quantity of need material is great, thus its cost will be high; thirdly, the machining of honeycomb plate is inconvenient/ time-consuming, and it can be processed only into regular flat-surface sheet. EP-A1-1149691 discloses a honeycomb composite plate according to the preamble of Claim 1, but without supporting elements like a skeleton and outside coatings.

### SUMMARY OF THE INVENTION

The invention provides a honeycomb composite plate of plastic foam, to overcome the shortages of honeycomb composite plates of background technology.

In order to solve the technical problems, the invention focuses on the improvement of support core of the composite plate, the support core is the honeycomb structure formed by the plastic foam, material, the applied technical solution is:
A honeycomb composite plate of plastic foam, which comprises at least: a support body comprising at least a support core, which has a honeycomb structure and is formed of plastic foam; and a plastic surface sheet which is fixed to the support body and supported by it; further, the support core and plastic surface sheet are fixed together.

In a preferred embodiment of the present invention, said support body further comprises a support skeleton, and the support skeleton is made of metal; moreover, the support core supports the support skeleton and plastic surface sheet to fix them together.

In a preferred embodiment of the present invention, said support skeleton wraps all or part of the periphery of support core.

In a preferred embodiment of the present invention, it further comprises a plastic substrate fixed under the support body and supported by it; moreover, said support core/plastic surface sheet and plastic substrate are fixed together.

In a preferred embodiment of the present invention, said plastic surface sheet is a blister surface sheet; the plastic substrate is a blister substrate.

In a preferred embodiment of the present invention, said support core and the plastic surface sheet/the plastic substrate are fixed by welding or adhesion.

In a preferred embodiment of the present invention, said honeycomb structure of support core has several honeycomb slots, and the opening of the honeycomb slots is upward or downward.

In a preferred embodiment of the present invention, said honeycomb slots of support core are blind slots.

In a preferred embodiment of the present invention, said honeycomb slots of support core are through slots.

In a preferred embodiment of the present invention, said honeycomb slots of support core are double-faced slots, and its middle part is integral and has a transverse supporting surface.

In a preferred embodiment of the present invention, said honeycomb slots of support core are convex and concave slots, wherein blind holes are staggered.

In a preferred embodiment of the present invention, the shape of the honeycomb slots of support core may be triangular, squared, hexagonal or circular.

In a preferred embodiment of the present invention, said plastic substrate is wave-shaped, its protruded part extends into the blind slots of honeycomb slots of support core, and is fixed to the top of blind slots by adhesion or welding.

In a preferred embodiment of the present invention, said honeycomb structure of the support core is made by one-step mould pressing and foam to form the needed shape.

Compared with the background technology, the present technical proposal is as follows: as the support core forms honeycomb structure and is processed by the plastic foam material, it overcomes the drawbacks of background technology, and has advantages as follows: firstly, the honeycomb structure processed by the plastic foam material has higher bearing strength without filling plastic foam filling, and it is cheap; secondly, the material of the support core is same as the plastic surface sheet and plastic substrate, so strength of adhesion or welding between them is reliable, they will not easily removed, and the same expansion coefficient between them overcomes abscission being aroused by expansion and contraction; thirdly, the honeycomb structure processed by the plastic foam material is shaped by one-step, and it can directly form a regular or irregular support core. As the honeycomb slot opens upwards or downwards, it has higher bearing strength and can support weight borne by plastic surface sheet very well. Because the honeycomb slots are blind slot or through slot, they can be mould pressed and foamre to form the needed shape through one step.

### BRIEF DESCRIPTION OF THE DRAWINGS

A detailed explanation is combinee with drawings and embodiments.
FIG.1 is a sectional view of the composite plate of embodiment 1.
FIG.2 is a bottom view of the support core of embodiment 1.
FIG.3 is a sectional view of the support core of embodiment 1.
FIG. 4 is a sectional view of production mould of the support core of embodiment 1.
FIG.5 is a sectional view of the composite plate of embodiment 2.
FIG.6 is a sectional view of the composite plate of embodiment 3.
FIG.7 is a sectional view of the composite plate of embodiment 4.
FIG.8 is a sectional view of the composite plate of embodiment 5.
FIG.9 is a sectional view of the composite plate of embodiment 6.
FIG.10 is a sectional view of the composite plate of embodiment 7.
FIG.11 is a bottom view of the support core of embodiment 7.
FIG. 12 is a sectional view of the support core of embodiment 7.
FIG.13 is a sectional view of the composite plate of embodiment 8.
FIG.14 is a sectional view of the composite plate of embodiment 9.
FIG. 15 is a vertical view of the support core of embodiment 10.
FIG. 16 is a sectional view of the support core of embodiment 10.
FIG.17 is a bottom view of the support core of embodiment 11.
FIG. 18 is a sectional view of the support core of embodiment 11.
FIG.19 is a sectional view of the composite plate of embodiment 12.
FIG.20 is a sectional view of the composite plate of embodiment 13.
FIG.21 is a sectional view of the composite plate of embodiment 14.
FIG.22 is a bottom view of the support core of embodiment 14.
FIG. 23 is a sectional view of the support core of embodiment 14.
FIG.24 is a sectional view of the support core of embodiment 15.
FIG. 25 is a sectional view of the support core of embodiment 16.

### DETAILED DESCRIPTION OF PREFERRED EMBODIMENTS

### Embodiment 1

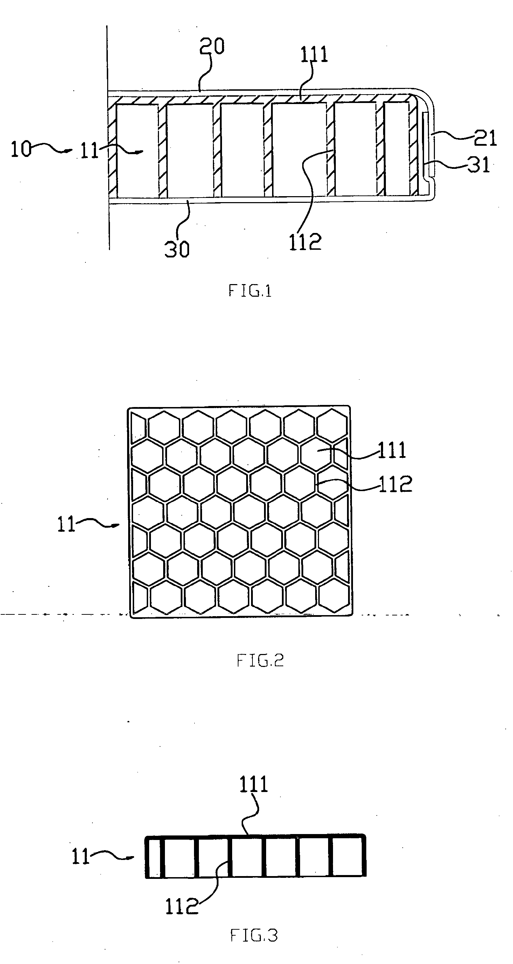

Referring to FIG.1, a honeycomb composite plate of plastic foam comprises a support body 10/plastic surface sheet 20 and a plastic substrate 30.

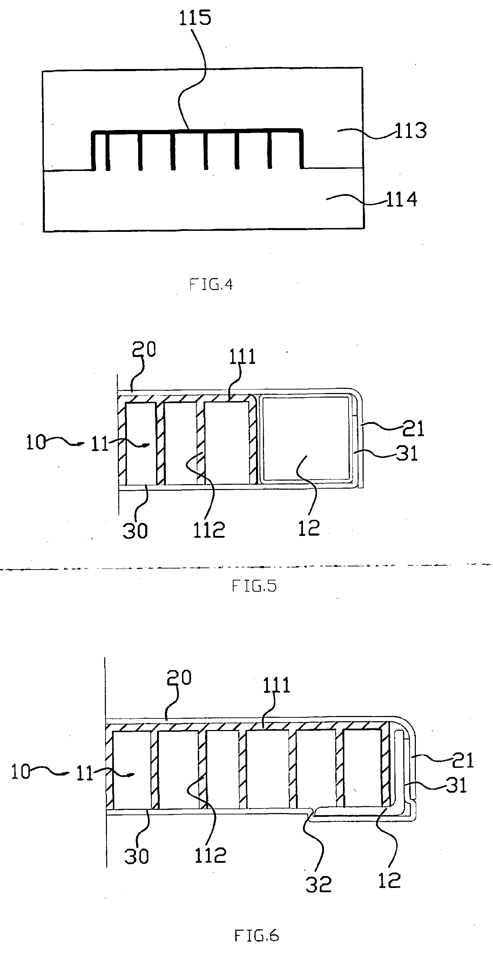

The support body 10 comprises a support core 11, the support core 11 is processed as a honeycomb structure by the plastic foam material, and the support core 11 in the embodiment is flat-plate shaped. Referring to FIG. 2 and FIG. 3, the honeycomb structure is a bionic structure product made according to a structured feature of a bee nest. In the embodiment, the honeycomb structure comprises an entire upper plate 111 and the surrounding walls 112 of a various regular hexagonal shape, connected with the bottom of the entire upper plate 111, and the adjacent surrounding walls 112 of the regular hexagonal are edge-shaped. In the honeycomb structure, the surrounding walls 112 of the various regular hexagonal shape coordinated with the entire upper plate 111 form several honeycomb slots, the honeycomb slots are blind slots and open all downwards. As setting up the entire upper plate, the honeycomb structure is by one-step mould pressed and foamed to form the needed shape without additional machining. Referring to FIG. 4, the production mould needed in mould pressing and foaming to form has a structure with upper mould 113 and lower mould 114. The combination of upper mould 113 and lower mould 114 comes into being a mode cavity 115, which is a honeycomb structure. But the honeycomb paper plate of the existing technology is impossible to be shaped to the entire upper plate by one step, thus the present invent obviously surpasses the existing technology.

The plastic surface sheet 20 and the plastic substrate 30 have same structure, having same single layer plastic with thickness between 0.3 mm - 4 mm ; the single layer plastic using ABS/PP or PS is suck molded or processed directly to needed shapes, then cuts to needed size according to surface sheet, e.g. square/rectangle/circular and other regular or irregular shapes. In the embodiment, the blister surface sheet 20 and the blister bottom surface sheet 30 are all rectangular flat-plates, and both of them have wood grains /other grains /or composite bed with wood grains and other grains mixed printed on. In the embodiment, the blister surface sheet 20 and the blister bottom surface sheet 30 are taking single layer plastic as examples, but multilayer plastics plate can be applied in the invention as well.

The outer edge of the plastic surface sheet 20 extends downwards to form the upper outside periphery 21; the outer edge of the plastic substrate 30 extends upwards to form the lower outside periphery 31, the lower outside periphery 31 has inward steps whose height is the same as the thickness of the upper outside periphery 21.

The underside of the plastic surface sheet 20 is adherent to the top of the support core 11 with ultrasonic welding or glue, and forms a closed fixed connection; the plastic substrate30 is sealed and fixed to the support core 11 with ultrasonic welding or glue; the medial surface of the upper outside periphery 21 is sealed and fixed to the lateral surface of steps in lower outside periphery 31 with ultrasonic welding or glue, among them, the underside of the upper outside periphery 21 connects with steps in lower outside periphery 31. The plastic surface sheet 20, the plastic substrate 30 and the support core 11 are fixed together with ultrasonic welding or glue

### Embodiment 2

The difference between Embodiment 1 and Embodiment 2 is: referring to FIG. 5, the support body 10 comprises a support skeleton 12, and the support skeleton 12 is used to enhance bearing strength and connect component. The whole support skeleton 12 is closed-loop frame, such as "□" shaped frame or "○" shaped frame, but not limited to these: other shaped frames can be applied in the invention as well, such as: four pipes arrange to "□"shaped frame; "□"shaped frame□ "□"shaped frame; "U" shaped frame; or two pipes arrange standing side by side; or four bulks, arranged in four corners of the rectangle. The sectional view of the support skeleton 12 is hollow pipe fittings, but not limited to these, such as extrusion material, or pipe fittings extrusion material and a hardware compound tier with injection molding can all be applied in the invention as well.

The support skeleton 12 coats all surrounding of the support core 11. Among them, the medial surface of the support skeleton 12 and the lateral surface of the support core 11 are fixed by welding or adhesion with ultrasonic welding or glue. With ultrasonic welding or glue, the plastic surface sheet 20/top of support core 11 and the support skeleton 12 form a closed fixed connection; the top of plastic substrate 30, the bottom of support core 11 and the bottom of support skeleton 12 are sealed and fixed together with ultrasonic welding or glue; the medial surface of the upper outside periphery 21 / lateral surface of steps in the lower outside periphery 31 are sealed and fixed together with ultrasonic welding or glue; the lower outside periphery 31 is sealed and fixed to the lateral surface of support skeleton 12 with ultrasonic welding or glue; the plastic surface sheet 20/plastic substrate 30/support core 11 and support skeleton 12 are sealed and fixed together with ultrasonic welding or glue.

In order to enhance the bearing strength of the composite plate, the corner lining component can be set up according to demand; it can be fixed directly to the support skeleton 12 by welding or adhesion, or be fixed between the plastic substrate and the support core.

### Embodiment 3

The difference between Embodiment 2 and Embodiment 3 is: referring to FIG. 6, the sectional view of the support skeleton 12 is a "L"-shaped frame, the support skeleton 12 comprises a horizontal edge and an erected edge connecting with medial surface of the horizontal edge; a groove 32 is set on the outside periphery of the plastic substrate 30; the horizontal edge is fixed to the lateral surface of groove 32 by welding or adhesion. The medial surface of the erected edge is fixed to the lateral surface of the support core 11 by welding or adhesion; the lower outside periphery is fixed to the lateral surface of the erected surface by welding or adhesion.

### Embodiment 4

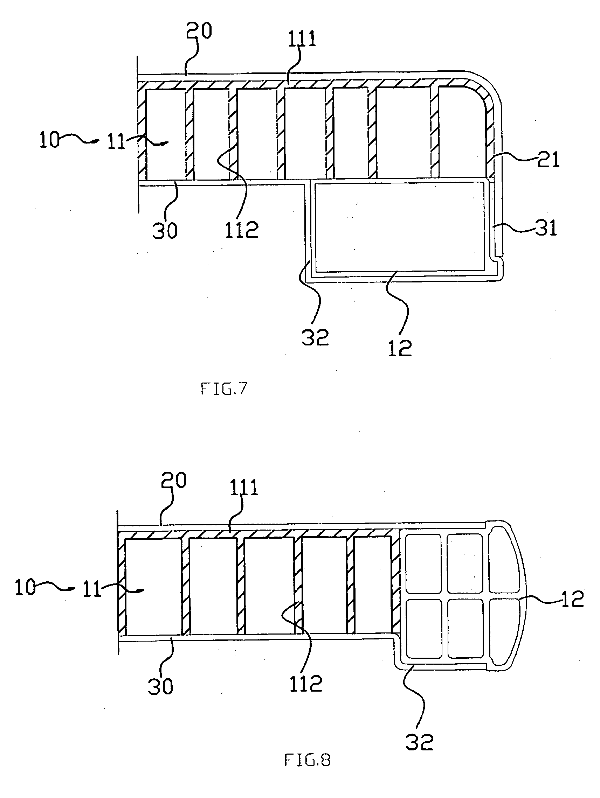

The difference between Embodiment 4 and Embodiment 2 is: referring to FIG. 7, a place tank 32 is set outside the periphery of the plastic substrate 30; the support skeleton 12 is fixed in place tank 32, and the top of support skeleton 12 and the bottom of support core 11 are flush, and they are fixed together by welding or adhesion; the upper outside periphery 21 is fixed to the outer of support core 11 and the outer of the lower outside periphery 31 by welding or adhesion.

### Embodiment 5

The difference between Embodiment 5 and Embodiment 2 is: referring to FIG. 8, steps with high outside and low inside are set in the upper and lower part of the support skeleton 12, the plastic surface sheet 20 is fixed to the top of support skeleton 12 by welding or adhesion, and its head face connects with the surface of the stair. The outside periphery of the plastic substrate 30 is concave downwards and forms a locating slot 33; at the same time, the plastic substrate 30 is fixed to the bottom of the support skeleton 12 by welding or adhesion, and its head face is connected with the surface of the stair. The outer part of the support skeleton 12 forms the outer part of the composite plate.

### Embodiment 6

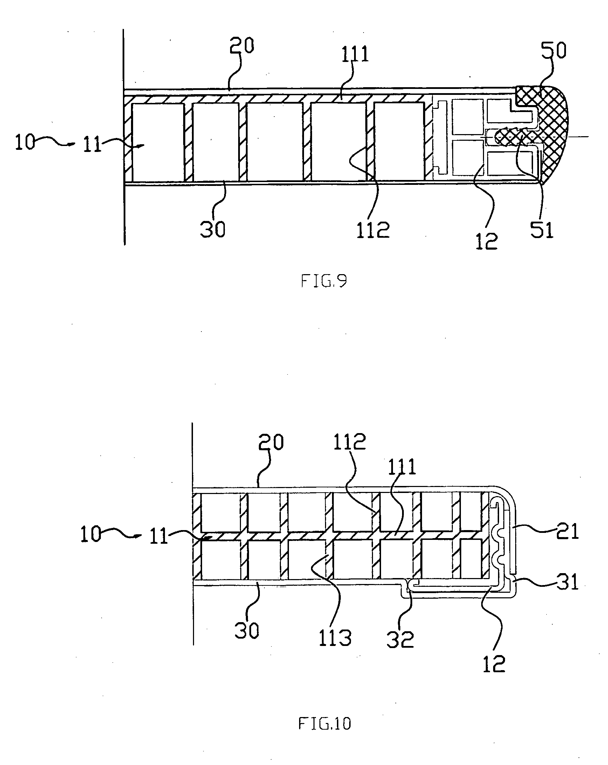

The difference between Embodiment 6 and Embodiment 2 is: referring to FIG. 9, the embodiment 6 comprises a edge sealing component 50, a link slot is set outside the support skeleton, a cutting grafting unit 51 is set on the edge sealing component 50, and the peg graft unit 51 is connected firmly with the link slot: they can choose close fit or rugged face fit according to demand, or set an agnail outside on the peg graft unit 51.

### Embodiment 7

The difference between Embodiment 7 and Embodiment 3 is: referring to FIG. 10/FIG. 11 and FIG. 12, the erected edge of the support skeleton 12 is wave-shaped, a convex part is set in the medial surface of the lower outside periphery 31 to coincide with the wave-shaped; the honeycomb structure of the support core 11 comprises a mid entire plate 111 severing as support plate/various surrounding walls 112 of the regular quadrilateral connected with the upper side and the bottom of the upper mid entire plate 111, and the adjacent surrounding walls 112 of the regular quadrilateral are edge-shared. In the honeycomb structure, the upper surrounding walls 112 of the regular quadrilateral coincides with the mid entire plate 111 to form several upper honeycomb slots with downward opening; the lower surrounding walls 113 of the regular quadrilateral coincides with the mid entire plate 111 to form several lower honeycomb slots with downward opening; and the upper /lower honeycomb slots are blind slots. The honeycomb structure is one-step mould pressed and foamed to form the needed shape without additional machining; generally, it is used for a composite plate that has high demand in strength of core plate. But in order to enhance strength, the multi-layer structure with double honeycomb cores adding a bulkhead is applied in the existing technology, and the machining of honeycomb plate is inconvenient and with lower strength; the bearing strength of the honeycomb plate is weak. The present invent obviously surpasses the existing technology.

### Embodiment 8

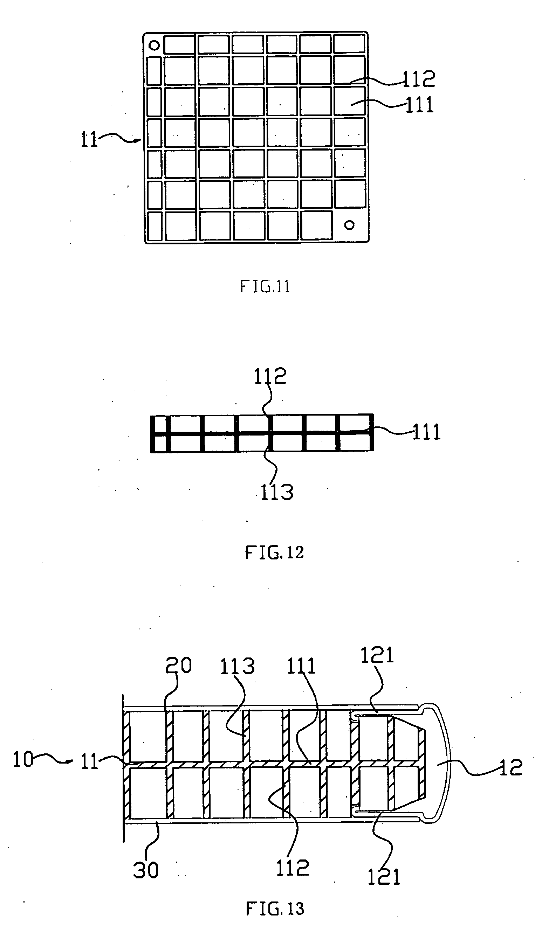

The difference between Embodiment 8 and Embodiment 7 is: referring to FIG. 13, elastic claws 121 are set on the upper/lower parts of support skeleton 12, the upper elastic claw 121 of the support skeleton 12 inserts into the space between plastic surface sheet 20 and support core 11, and is fixed by the claw. The outside periphery of the support skeleton 12 forms the outside periphery of the composite plate.

### Embodiment 9

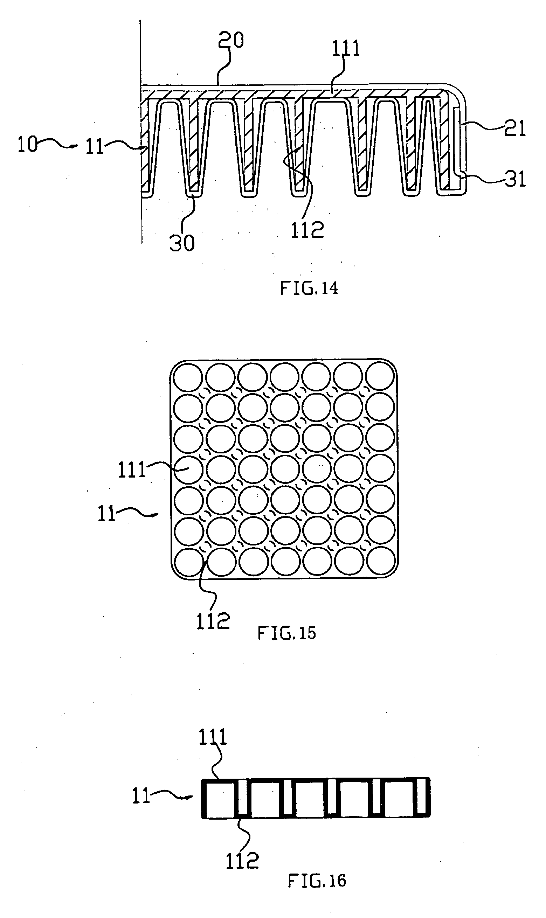

The difference between Embodiment 9 and Embodiment 1 is: referring to FIG. 14, the plastic substrate 30 is wave-shaped, the lowest part is fixed to the bottom of blind slot 112 of support core 11 by welding or adhesion, its convex part extends into the blind slot of honeycomb slots of the support core 11, and is fixed to the top of blind slot 112 by welding or adhesion; the plastic plate 20 is fixed to the entire upper plate 111 by welding or adhesion.

### Embodiment 10

The difference between Embodiment 10 and Embodiment 1 is: referring to FIG. 15 and FIG. 16, the honeycomb structure comprises several circular blind honeycomb slots 111 opening downwards, a link plate 112 is fixed between every two adjacent bottoms of the honeycomb slots 111. As the honeycomb slots 111 are slotted, and the link plate 112 is set, thus honeycomb slots can be one-step mould pressed and foamed to form the needed shape.

### Embodiment 11

The difference between Embodiment 11 and Embodiment 1 is: referring to FIG. 15 and FIG. 16, the honeycomb structure comprises an entire plate 111/various regular triangle surrounding walls 112 connecting with the bottom of the entire upper plate 111, and the adjacent regular triangle surrounding walls 112 are edge-shaped. In the honeycomb structure, the upper surrounding walls 112 of the regular triangle coincide with the entire plate 111 to form several upper honeycomb slots which are blind slots with downward opening. With the entire upper plate 111, the honeycomb structure can be one-step mould pressed and foamed to form the needed shape.

### Embodiment 12

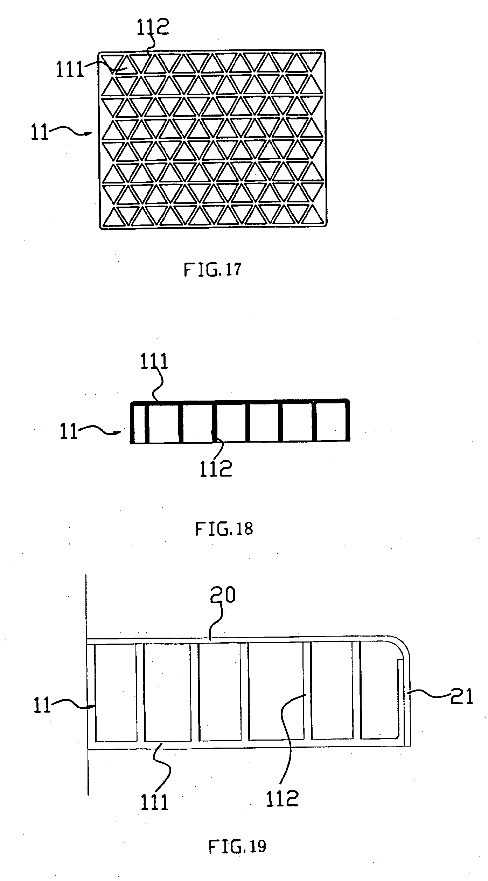

The difference between Embodiment 12 and Embodiment 1 is: referring to FIG. 19, a honeycomb composite plate of plastic foam comprises the support body 10 and the plastic surface sheet 20.

The support body 10 comprises a support core 11, the support core 11 is honeycomb structure processed by the plastic foam material, and the support core 11 in the embodiment is flat-plate shaped. Referring to FIG. 2 and FIG. 3, the honeycomb structure is a bionic structure product made according to the structured feature of a bee nest. In the embodiment, the honeycomb structure comprises a entire lower plate 111 and the surrounding walls 112 of the various regular hexagonal are connected with the bottom of the lower plate 111, and the adjacent surrounding walls 112 of the regular hexagonal are edge-shaped. In the honeycomb structure, the surrounding walls 112 of the various regular hexagonal are coordinated with the entire lower plate 111 to form several honeycomb slots, the honeycomb slots are blind slots and open all upwards. When setting up the entire lower plate, the honeycomb structure is one-step mould pressed and foamed to form the needed shape without additional machining, and that saves plastic substrate.

The plastic surface sheet 20 and plastic substrate 30 have the same structure, having the same single-layer plastic with thickness between 0.3 mm - 4 mm ; the single-layer plastic using ABS/PP or PS is suck molded or processed directly to needed shapes, then cut to needed size according to surface sheet, e.g. square/rectangle/circular and other regular or irregular shapes. In the embodiment, the blister surface sheet 20 and the blister bottom surface sheet 30 are all rectangle flat-plate, and both of them have wood grains /other grains /or composite bed with wood grains and other grains mixed printed on. In the embodiment, the blister surface sheet 20 and the blister bottom surface sheet 30 are taking single layer plastic as examples, but a multilayer plastics plate can be applied in the invention as well. The outer edge of the plastic surface sheet 20 extends downwards to form the upper outside periphery 21.

The underside of the plastic surface sheet 20 is sealed and fixed to the top of the support core 11 with ultrasonic welding or glue; the medial surface of the upper outside periphery 21 is sealed and fixed to the lateral surface of the support core 11 with ultrasonic welding or glue. The plastic surface sheet 20 and the support core 11 are fixed together with ultrasonic welding or glue.

### Embodiment 13

The difference between Embodiment 1 and Embodiment 2 is: referring to FIG. 5, the support body 10 comprises a support skeleton 12, the support skeleton 12 is used to enhance bearing strength and connect component. The whole support skeleton 12 is closed-loop frame, such as "□"shaped frame or "○" shaped frame, but not limited to these frames: other shaped framed can be applied in the invention as well, such as: four pipes arrange to "□"shaped frame; "□"shaped frameD "□"shaped frame. The sectional view of the support skeleton 12 is hollow pipe fittings, but not limited to these frames, such as extrusion material, or pipe fittings extrusion material and hardware compound tier with injection molding can all be applied in the invention as well.

A rocking slot 116 is set on the outer surface of the support core 11, the support skeleton 12 is firmly fixed in the rocking slot 116 of support core 11, and the plastic surface sheet 20 is fixed to the top of support core 11 and the top of the support skeleton 12 by welding or adhesion.

### Embodiment 14

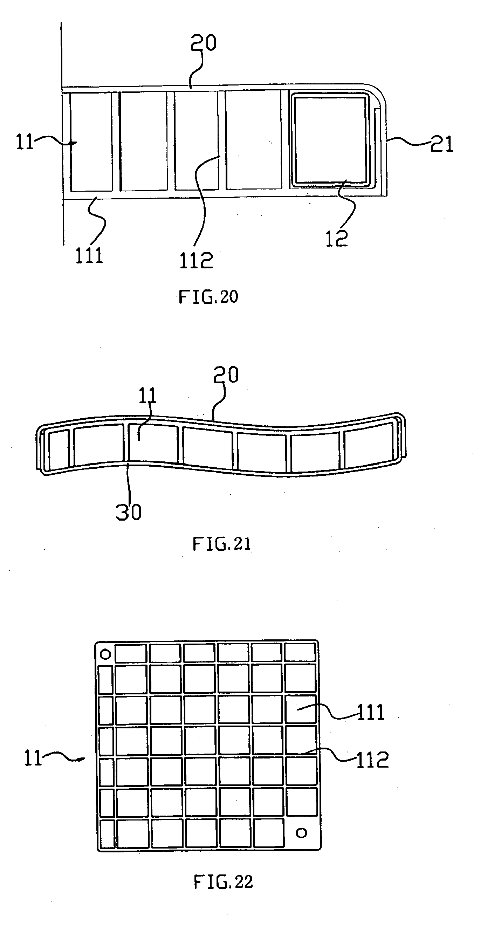

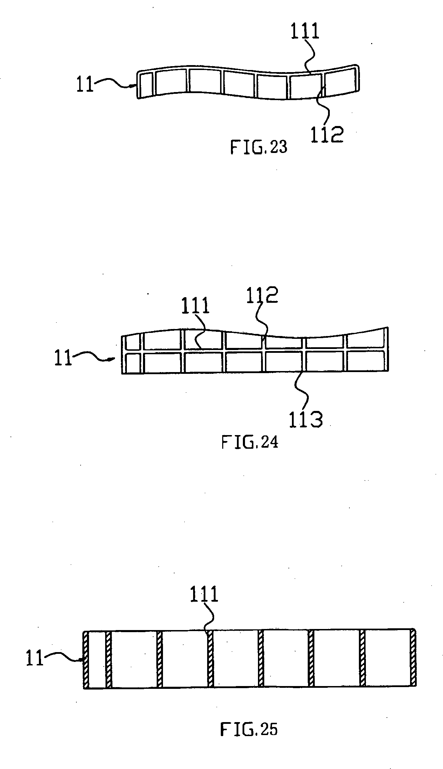

The difference between Embodiment 14 and Embodiment 12 is: referring to FIG. 21/FIG. 22 and FIG. 23, the support core 11 in the embodiment is curved-plate shaped. After upper/lower mould is set, the mold cavity composed between them is curved-plate shaped. The mould can be one-step mold pressed and foamed to form the needed shape. The honeycomb structure of the support core 11 comprises the entire upper plate 111 and various regular quadrilateral surrounding walls connected with the bottom of the entire upper mid plate 111.

### Embodiment 15

The difference between Embodiment 15 and Embodiment 7 is: the honeycomb structure of the support core 11 comprises an entire mid plate 111 severing as support plate, various surrounding walls 112 of the regular quadrilateral connected with the top and bottom of the entire upper mid plate 111. The coordination of the upper regular quadrilateral surrounding walls forms a curved face, the coordination of the lower regular quadrilateral surrounding walls forms a flat face.

### Embodiment 16

The difference between Embodiment 15 and Embodiment 1/11/14/15 is: the honeycomb structure of the embodiment comprises various surrounding walls 112 of regular hexagonal shape, and the adjacent regular hexagonal surrounding walls 112 are edge-shaped, the surrounding walls 112 of hexagonal coordinates to form various through slots whose upper and lower are linked up. Because the adjacent surrounding walls 112 of the regular hexagonal are edge-shaped, the honeycomb structure can be one-step mould pressed and foamed to form the needed shape without additional machining.

All above is only a preferred embodiment of the invention; therefore, it is intended that the invention is not limited to the preferred embodiment. Any equivalent modification and addition according to the range of invention applied for patent and the contents of the instructions belongs to the scope of the patent of invention.

### INDUSTRIAL APPLICABILITY

The invention is a honeycomb composite plate of plastic foam, the support core of the honeycomb structure is processed by the plastic foam material, thus the plate has high bearing strength/less cost/can be shaped by one step and forms regular or irregular support core directly.

## Claims

1. A honeycomb composite plate of plastic foam, comprising at least:
a support body (10) comprising at least a support core (11), which has a honeycomb structure and is formed of plastic foam; and
a plastic surface sheet (20) fixed to the support body and supported by it, the support core (11) and the plastic surface sheet (20) being fixed together,
**characterized in that** said support body (10) further comprises:
- a support skeleton (12), the support skeleton (12) being made of metal, the support core (11) supporting the support skeleton (12) and the plastic surface sheet (20) to be fixed together; and
- a plastic substrate (30) fixed under the support body and supported by it, said support core (11)/plastic surface sheet (20) and plastic substrate (30) being fixed together.

2. The honeycomb composite plate of plastic foam according to claim 1, **characterized in that** said support skeleton (12) is adapted to wrap all or part of the periphery of the support core (11).

3. The honeycomb composite plate of plastic foam according to claim 1, **characterized in that** said plastic surface sheet (20) is a blister surface sheet, and the plastic substrate (30) is a blister substrate.

4. The honeycomb composite plate of plastic foam according to claim 1, **characterized in that** said support core (11) and the plastic surface sheet (20)/the plastic substrate (30) are fixed by welding or adhesion.

5. The honeycomb composite plate of plastic foam according to claim 1 or claim 2 or claim 4, **characterized in that** said honeycomb structure of support core (11) has several honeycomb slots, the opening of the honeycomb slots being upward or downward.

6. The honeycomb composite plate of plastic foam according to claim 5, **characterized in that** said honeycomb slots of the support core (11) are blind slots, and its bottom is integral therewith and has a plane.

7. The honeycomb composite plate of plastic foam according to claim 5, **characterized in that** said honeycomb slots of the support core (11) are blind slots, and its bottom is integral therewith and has a connecting surface.

8. The honeycomb composite plate of plastic foam according to claim 5, **characterized in that** said honeycomb slots of the support core (11) are double-faced slots, and its middle part is integral therewith and has a transverse supporting surface.

9. The honeycomb composite plate of plastic foam according to claim 5, **characterized in that** said honeycomb slots of the support core (11) are convex and concave slots, wherein blind holes are staggered, or are through slots.

10. The honeycomb composite plate of plastic foam according to claim 5, **characterized in that** said honeycomb slots of the support core (11) are through slots.

11. The honeycomb composite plate of plastic foam according to claim 5, **characterized in that** the shape of the honeycomb slots of the support core (11) triangular, squared, hexagonal or circular.

12. The honeycomb composite plate of plastic foam according to claim 5, **characterized in that** said plastic substrate (30) is wave-shaped, its protruded part extends into the blind slots of the honeycomb slots of the support core (11), and is fixed to the top of blind slots by adhesion or welding.

13. The honeycomb composite plate of plastic foam according to claim 5, **characterized in that** said plastic foam honeycomb structure of the support core (11) is integrated as a curved surface shape, the support core (11) being fixed connected with the plastic surface sheet (20).

14. The honeycomb composite plate of plastic foam according to claim 5, **characterized in that** said honeycomb structure of the support core (11) is adapted to be one-step mould pressed and foamed to form a needed shape.

## Patentansprüche

1. Wabenverbundplatte aus Schaumkunststoff, die mindestens folgendes einschließt:
- einen Trägerkörper (10), der mindestens einen Trägerkern (11) enthält, welcher eine Wabenstruktur hat und aus Schaumkunststoff gebildet ist;
- eine Kunststofffolie auf der Oberfläche (20), die am Trägerkörper befestigt und von diesem getragen wird, der Trägerkern (11) und die Kunststofffolie auf der Oberfläche (20) sind aneinander befestigt;
und **dadurch gekennzeichnet** ist, dass der genannte Trägerkörper (10) außerdem folgendes einschließt:
- ein Trägerskelett (12), das Trägerskelett (12) wird aus Metall hergestellt, der Trägerkern (11) trägt das Trägerskelett (12) und die Kunststofffolie auf der Oberfläche (20), die aneinander befestigt werden müssen; und
- ein Substrat aus Kunststoff (30), das unter dem Trägerkörper befestigt wird und von diesem getragen wird, der genannte Trägerkern (11)/die genannte Kunststofffolie auf der Oberfläche (20) und das Substrat aus Kunststoff (30) sind aneinander befestigt.

2. Wabenverbundplatte aus Schaumkunststoff gemäß Patentanspruch 1, die **dadurch gekennzeichnet** ist, dass das genannte Trägerskelett (12) dazu dient, die gesamte oder teilweise Umfangslinie des Trägerkerns (11) zu umschließen.

3. Wabenverbundplatte aus Schaumkunststoff gemäß Patentanspruch 1, die **dadurch gekennzeichnet** ist, dass die genannte Kunststofffolie auf der Oberfläche eine Blisterfolie auf der Oberfläche und das Substrat aus Kunststoff ein Blistersubstrat ist.

4. Wabenverbundplatte aus Schaumkunststoff gemäß Patentanspruch 1, die **dadurch gekennzeichnet** ist, dass der genannte Trägerkern (11) und die Kunststofffolie auf der Oberfläche/das Substrat aus Kunststoff durch Schweißung oder Haftung aneinander befestigt sind.

5. Wabenverbundplatte aus Schaumkunststoff gemäß Patentanspruch 1 oder Patentanspruch 2 oder Patentanspruch 4, die **dadurch gekennzeichnet** ist, dass die genannte Wabenstruktur des Trägerkerns (11) mehrere Wabenöffnungen hat, die nach oben oder unten ausgerichtet sind.

6. Wabenverbundplatte aus Schaumkunststoff gemäß Patentanspruch 5, die **dadurch gekennzeichnet** ist, dass die genannten Wabenöffnungen des Trägerkerns (11) Blindöffnungen sind, und dass ihr Boden ein Stück mit ihnen bildet und eine Ebene hat.

7. Wabenverbundplatte aus Schaumkunststoff gemäß Patentanspruch 5, die **dadurch gekennzeichnet** ist, dass die genannten Wabenöffnungen des Trägerkerns (11) Blindöffnungen sind, und dass ihr Boden ein Stück mit ihnen bildet und eine Verbindungsfläche hat.

8. Wabenverbundplatte aus Schaumkunststoff gemäß Patentanspruch 5, die **dadurch gekennzeichnet** ist, dass die genannten Wabenöffnungen des Trägerkerns (11) zweiseitige Öffnungen sind, und dass ihr mittlerer Teil ein Stück mit ihnen bildet und eine transversale Trägerfläche hat.

9. Wabenverbundplatte aus Schaumkunststoff gemäß Patentanspruch 5, die **dadurch gekennzeichnet** ist, dass die genannten Wabenöffnungen des Trägerkerns (11) konvexe und konkave Öffnungen sind, und dass die Blindöffnungen versetzt oder durchgehend sind.

10. Wabenverbundplatte aus Schaumkunststoff gemäß Patentanspruch 5, die **dadurch gekennzeichnet** ist, dass die genannten Wabenöffnungen des Trägerkerns (11) durchgehende Öffnungen sind.

11. Wabenverbundplatte aus Schaumkunststoff gemäß Patentanspruch 5, die **dadurch gekennzeichnet** ist, dass die Form der genannten Wabenöffnungen des Trägerkerns (11) dreieckig, viereckig, sechseckig oder kreisförmig ist.

12. Wabenverbundplatte aus Schaumkunststoff gemäß Patentanspruch 5, die **dadurch gekennzeichnet** ist, dass das genannte Substrat aus Kunststoff eine Wellenform hat, dass sich sein herausragender Teil in die Blindöffnungen der Wabenöffnungen des Trägerkerns (11) hinein ausdehnt, und dass es am oberen Teil der Blindöffnungen durch Haftung oder Schweißung befestigt ist.

13. Wabenverbundplatte aus Schaumkunststoff gemäß Patentanspruch 5, die **dadurch gekennzeichnet** ist, dass die genannte Wabenstruktur aus Schaumkunststoff des Trägerkerns (11) als gebogene Form integriert wird, der Trägerkern (11) ist in Verbindung mit der Kunststofffolie auf der Oberfläche befestigt.

14. Wabenverbundplatte aus Schaumkunststoff gemäß Patentanspruch 5, die **dadurch gekennzeichnet** ist, dass die genannte Wabenstruktur des Trägerkerns (11) dazu dient, in einer Phase in der Presse gepresst und ausgedehnt zu werden, um die notwendige Form zu bilden.

## Revendications

1. Plaque composite en nid d'abeilles en plastique expansé, comprenant au moins :
- un corps de support (10) comprenant au moins un noyau de support (11) à structure en nid d'abeilles et formé de plastique expansé ;
- une feuille superficielle en plastique (20) fixée au corps de support et soutenue par ce dernier, le noyau de support (11) et la feuille superficielle en plastique (20) sont fixés ensemble;
**caractérisée par le fait que** le corps de support (10) comprend aussi :
- un squelette de support (12), le squelette de support (12) est en métal, le noyau de support (11) soutient le squelette de support (12) et la feuille superficielle en plastique (20) à fixer ensemble ; et
- un substrat en plastique (30) fixé sous le corps de support et soutenu par ce dernier, le noyau de support (11)/feuille superficielle en plastique (20) et le substrat en plastique (30) sont fixés ensemble.

2. Plaque composite en nid d'abeilles en plastique expansé, selon la revendication 1, où le squelette de support (12) est en mesure d'envelopper toute ou une partie de la périphérie du noyau de support (11).

3. Plaque composite en nid d'abeilles en plastique expansé, selon la revendication 1, où la feuille superficielle en plastique est une feuille superficielle en blister et le substrat en plastique est un substrat en blister.

4. Plaque composite en nid d'abeilles en plastique expansé, selon la revendication 1, où le noyau de support (11) et la feuille superficielle en plastique/substrat en plastique sont fixés par soudure ou adhésion.

5. Plaque composite en nid d'abeilles en plastique expansé, selon la revendication 1 ou la revendication 2 ou la revendication 4, où la structure en nid d'abeilles du noyau de support (11) possède plusieurs fentes en nid d'abeilles, l'ouverture des fentes en nid d'abeilles se fait vers le haut ou le bas.

6. Plaque composite en nid d'abeilles en plastique expansé, selon la revendication 5, où les fentes en nid d'abeilles du noyau de support (11) sont des fentes aveugles et dont le fond, qui est solidaire des fentes, est doté d'un plan.

7. Plaque composite en nid d'abeilles en plastique expansé, selon la revendication 5, où les fentes en nid d'abeilles du noyau de support (11) sont des fentes aveugles, et dont le fond, qui est solidaire des fentes, est doté d'une surface de connexion.

8. Plaque composite en nid d'abeilles en plastique expansé, selon la revendication 5, où les fentes en nid d'abeilles du noyau de support (11) sont des fentes à double face et dont la partie intermédiaire, qui est solidaire des fentes, est dotée d'une surface de support transversale.

9. Plaque composite en nid d'abeilles en plastique expansé, selon la revendication 5, où les fentes en nid d'abeilles du noyau de support (11) sont des fentes convexes et concaves, à trous aveugles décalés ou à fentes passantes.

10. Plaque composite en nid d'abeilles en plastique expansé, selon la revendication 5, où les fentes en nid d'abeilles du noyau de support (11) sont des fentes passantes.

11. Plaque composite en nid d'abeilles en plastique expansé, selon la revendication 5, où la forme des fentes en nid d'abeilles du noyau de support (11) est triangulaire, carrée ou circulaire.

12. Plaque composite en nid d'abeilles en plastique expansé, selon la revendication 5, où le substrat en plastique est de forme ondulée, sa partie saillante s'étend dans les fentes aveugles des fentes en nid d'abeilles du noyau de support (11), et elle est fixée à la partie supérieure des fentes aveugles par adhésion ou soudure.

13. Plaque composite en nid d'abeilles en plastique expansé, selon la revendication 5, où la structure en nid d'abeilles en plastique expansé du noyau de support (11) est intégrée comme une forme de surface courbe, le noyau de support (11) est fixé à la feuille superficielle en plastique.

14. Plaque composite en nid d'abeilles en plastique expansé, selon la revendication 5, où la structure en nid d'abeilles du noyau de support (11) est appropriée pour être estampée à la presse dans une phase puis expansée pour obtenir la forme nécessaire.
